# EUROPÄISCHE PATENTSCHRIFT

(11) **EP 3 599 573 B1**
(45) Veröffentlichungstag und Bekanntmachung des Hinweises auf die Patenterteilung: **21.10.2020**
(21) Anmeldenummer: 18185432.4
(22) Anmeldetag: 25.07.2018
(51) Int. Cl.: G06K 19/07

(54) **VERFAHREN ZUR DATENÜBERMITTLUNG ZWISCHEN EINEM FUNK-TRANSPONDER-LESEGERÄT UND EINEM FUNK-TRANSPONDER UND FUNK-TRANSPONDER**
METHOD FOR DATA TRANSMISSION BETWEEN A RADIO TRANSPONDER READER AND A RADIO TRANSPONDER AND RADIO TRANSPONDER
PROCÉDÉ DE TRANSMISSION DE DONNÉES ENTRE UN APPAREIL DE LECTURE TRANSPONDEUR RADIO ET UN TRANSPONDEUR RADIO ET TRANSPONDEUR RADIO

(43) Veröffentlichungstag der Anmeldung: 29.01.2020
(73) Patentinhaber: Siemens Aktiengesellschaft, 80333 München (DE)
(72) Erfinder: Hennig, Bernd, 90574 Rosstal (DE)

(56) Entgegenhaltungen:
- EP-A1- 2 940 916
- DE-A1-102015 106 256
- US-A1- 2006 071 782

## Beschreibung

Die vorliegende Erfindung betrifft ein Verfahren zur Datenübermittlung zwischen einem Funk-Transponder-Lesegerät und einem Funk-Transponder sowie einen Funk-Transponder zur Durchführung des Verfahrens.

Funk-Transponder können beispielsweise RFID-Tags (radiofrequency identification) sein, die zur Identifizierung oder Ortung von Gegenständen an diesen jeweils angebracht werden. RFID-Tags umfassen eine Speichereinheit, deren Inhalt mittels eines RFID-Lesegeräts ausgelesen, aber auch verändert werden kann. Üblicherweise ist in RFID-Tags jeweils zumindest ein Identifikator gespeichert. Zum Auslesen von in RFID-Tags gespeicherten Informationen senden RFID-Lesegeräte jeweils durch Erzeugung eines elektro-magnetischen Wechselfeldes ein Anfragesignal aus. Einerseits dient dieses elektro-magnetische Wechselfeld zur Energieversorgung insbesondere passiv betriebener RFID-Tags, die keine eigene Energiequelle aufweisen. Andererseits wird das elektro-magnetische Wechselfeld durch RFID-Tags zur Übermittlung eines Antwortsignals moduliert, beispielsweise durch Lastmodulation oder Variierung ihrer Antennenimpedanz.

Funk-Transponder-Systeme für industrielle Automatisierungssysteme müssen besonderen Anforderungen hinsichtlich zuverlässiger Datenübermittlung, Authentizität übermittelter Daten und Unempfindlichkeit gegenüber Störsendern genügen. Da industrielle Automatisierungssysteme zur Überwachung, Steuerung und Regelung von technischen Prozessen dienen, insbesondere im Bereich Fertigungs-, Prozess- und Gebäudeautomatisierung, können gestörte oder manipulierte Funk-Transponder-Systeme zu schwerwiegenden Auswirkungen führen, im ungünstigsten Fall zu einem Stillstand eines Automatisierungssystems.

Aus US9112543B2 ist ein Funk-Transponder-System bekannt, bei dem während eines Zeitabschnitts ein Signal zur Energieversorgung eines Kommunikationsgeräts übermittelt wird. Während eines zweiten Zeitabschnitts wird auf Basis von Phasenumtastung, Frequenzumtastung oder Quadraturamplitudenmodulation ein Datensignal an das Kommunikationsgerät übermittelt. Dabei wird für ein verwendetes Antennensystem während des ersten Zeitabschnitts ein größerer Q-Faktor eingestellt als während des zweiten Zeitabschnitts.

In US7932813B2 ist ein RFID-System mit einem RFID-Lesegerät beschrieben, das eine synchronisierte Abtastung verwendet, um ein Modulationssignal von einem RFID-Tag zu empfangen, und zwar unabhängig davon, ob das RFID-Tag hierfür Amplitudenumtastung, Frequenzumtastung oder Phasenumtastung nutzt. Ein durch das RFID-Tag erzeugtes Modulationssignal umfasst eine oder mehrere Subharmonische eines durch das RFID-Lesegerät erzeugten elektro-magnetischen Feldes, um dessen Frequenz der RFID-Leser eine synchronisierte Abtastung durchführt. Auf diese Weise wird eine Belastung des durch das RFID-Lesegerät erzeugten elektro-magnetischen Feldes durch das Modulationssignal gedämpft.

In HF-RFID-Systemen erfolgt eine Datenüberübermittlung von einem Transponder zu einem Schreib-/Lesegerät üblicherweise dadurch, dass ein HF-Trägersignal, das gleichzeitig zur Energieversorgung des Transponders dient über ein Zuschalten eines zusätzlichen Belastungswiderstands in seiner Amplitude verändert wird. Hierzu wird ein Steuerungssignal verwendet, das eine ausgewählte Steuerungssignal-Hilfsträgerfrequenz und eine ausgewählte Anzahl von Steuerungsimpulsen bzw. Schwingungen aufweist. Durch Verringerung der Anzahl von Steuerungsimpulsen bzw. durch eine Erhöhung der Steuerungssignal-Schaltfrequenz ist grundsätzlich eine Datenraten-Erhöhung möglich. Dies führt jedoch zu einer geringeren Reichweite bei der Datenübermittlung von Transpondern zu Schreib-/Lesegeräten bzw. zu einer erhöhten Empfindlichkeiten gegenüber Störungen. Gerade unter Anwendungsbedingungen in industriellen Automatisierungssystemen ist eine Verringerung der Anzahl von Steuerungsimpulsen hinsichtlich eines damit verbundenen Redundanzverlustes kritisch.

Der vorliegenden Erfindung liegt daher die Aufgabe zugrunde, ein Verfahren zur Datenübermittlung zwischen einem Funk-Transponder-Lesegerät und einem Funk-Transponder zu schaffen, das eine erhöhte Datenrate vom Funk-Transponder zum Funk-Transponder-Lesegerät ohne Einschränkungen bei Reichweite bzw. Zuverlässigkeit ermöglicht, sowie einen geeigneten Funk-Transponder zur Durchführung des Verfahrens anzugeben.

Diese Aufgabe wird erfindungsgemäß durch ein Verfahren mit den in Anspruch 1 angegebenen Merkmalen und durch einen Funk-Transponder mit den in Anspruch 12 angegebenen Merkmalen gelöst. Vorteilhafte Weiterbildungen der vorliegenden Erfindung sind in den abhängigen Ansprüchen angegeben.

Entsprechend dem erfindungsgemäßen Verfahren zur Datenübermittlung zwischen einem Funk-Transponder-Lesegerät, insbesondere einem Funk-Transponder-Lese-/Schreibgerät, und einem Funk-Transponder moduliert das Funk-Transponder-Lesegerät zumindest einen Steuerungsbefehl auf ein vorgegebenes Funk-Trägersignal und übermittelt das modulierte Funk-Trägersignal an den Funk-Transponder. Beispielsweise kann das Funk-Transponder-Lesegerät den Steuerungsbefehl codieren und danach auf das vorgegebene Funk-Trägersignal modulieren. Der Funk-Transponder empfängt das modulierte Funk-Trägersignal mittels einer induktiven Antennenanordnung, an die eine Lastmodulationseinheit angeschlossen ist, die eine veränderbare Lastimpedanz umfasst. Eine Steuerungseinheit des Funk-Transponders steuert zur Erzeugung eines Antwortsignals eine Veränderung der Lastimpedanz durch ein Steuerungssignal, das eine ausgewählte Schaltimpulsfrequenz und eine ausgewählte Schaltimpulsanzahl aufweist.

Erfindungsgemäß codiert die Steuerungseinheit mehrwertige zumindest ternäre Symbole in das Steuerungssignal. Symbolwerte werden jeweils zu Schaltimpulsfolgen zugeordnet, die jeweils eine eindeutige Kombination aus Schaltimpulsfrequenz, Schaltimpulszahl und Phasenverschiebung aufweisen. Dabei werden nur Kombinationen ausgewählt, deren Quotient aus Schaltimpulszahl und Schaltimpulsfrequenz innerhalb eines vorgegebenen Wertbereichs liegt. Damit umfassen die in das Steuerungssignal codierten Symbole einen erhöhten Informationsgehalt, woraus eine gesteigerte Datenrate resultiert. Insbesondere ist dies ohne Erhöhung der Schaltimpulsfrequenz bzw. ohne Reduktion der Schaltimpulsanzahl möglich. Die gesteigerte Datenrate hat also keine nachteiligen Auswirkungen auf Reichweite oder Störungssicherheit bzw. Redundanz. Vorzugsweise werden zur Codierung der Symbole zumindest eine erste und eine zweite Schaltimpulsfrequenz, eine erste und eine zweite Schaltimpulsanzahl sowie eine erste und eine zweite Phasenverschiebung verwendet.

Entsprechend einer vorteilhaften Ausgestaltung der vorliegenden Erfindung werden zur Codierung der Symbole zumindest eine erste und eine zweite Schaltimpulsfrequenz sowie eine erste und eine zweite Schaltimpulsanzahl verwendet. Dabei weichen ein Quotient aus erster Schaltimpulszahl und erster Schaltimpulsfrequenz und ein Quotient aus zweiter Schaltimpulszahl und zweiter Schaltimpulsfrequenz maximal 10 % voneinander ab. Die Datenrate bleibt damit unabhängig vom jeweils codierten Symbolwert relativ konstant.

Vorzugsweise wird zusätzlich zu o.g. Symbolwerten, die jeweils zu Schaltimpulsfolgen mit einer eindeutigen Kombination aus Schaltimpulsfrequenz, Schaltimpulszahl und Phasenverschiebung zugeordnet werden, genau ein Symbolwert verwendet, dem eine verschwindende Schaltimpulsfolge zugeordnet ist. Durch diese verschwindende Schaltimpulsfolge wird eine Lastmodulation für einen vorgegebenen Zeitraum deaktiviert. Vorteilhafterweise liegt dieser vorgegebene Zeitraum innerhalb des vorgegebenen Wertbereichs des Quotienten aus Schaltimpulszahl und Schaltimpulsfrequenz. Insbesondere kann die Steuerungseinheit mittels der den Symbolwerten zugeordneten Schaltimpulsfolgen eine Lastmodulation mit kombinierter Frequenzumtastung, Phasenumtastung und Modulationsdeaktivierung steuern.

Entsprechend einer bevorzugten Ausgestaltung der vorliegenden Erfindung weist das Steuerungssignal im wesentlichen Rechteckimpulse oder temporär keine Signalstärke auf. Insbesondere weisen die Rechteckimpulse vorzugsweise jeweils eine Impulsdauer auf, die einer halben Periodendauer entspricht. Dies ermöglicht Lesegerät-seitig eine einfache und zuverlässige Demodulation.

Die Steuerungseinheit ordnet die Symbolwerte vorteilhafterweise entsprechend einer in einer Speichereinheit des Funk-Transponders gespeicherten Codetabelle zu Schaltimpulsfolgen zu. Dabei ist auch im Funk-Transponder-Lesegerät eine entsprechende Codetabelle gespeichert. Darüber hinaus können ausgewählte Symbolwerte Steuerungsbefehle zur Datenflusskontrolle zwischen Funk-Transponder-Lesegerät und Funk-Transponder, zur Kollisionserkennung bei gleichzeitigen Sendeversuchen mehrerer Funk-Transponder bzw. zur Kennzeichnung eines Anfangs oder Endes eines Datenrahmens repräsentieren. Dies ermöglicht eine weitere Zuverlässigkeits- und Effizienzverbesserung bei der Datenübermittlung.

Der erfindungsgemäße Funk-Transponder ist zur Durchführung eines Verfahrens entsprechend vorangehenden Ausführungen vorgesehen und umfasst eine induktive Antennenanordnung, die dazu ausgestaltet und eingerichtet ist, ein vom einem Funk-Transponder-Lesegerät übermitteltes moduliertes Funk-Trägersignal zu empfangen, das zumindest einen auf ein Funk-Trägersignal modulierten Steuerungsbefehl umfasst. Außerdem weist der Funk-Transponder eine an die Antennenanordnung angeschlossene Lastmodulationseinheit auf, die eine veränderbare Lastimpedanz umfasst. Darüber hinaus ist eine Steuerungseinheit vorgesehen, die dazu ausgestaltet und eingerichtet ist, zur Erzeugung eines Antwortsignals eine Veränderung der Lastimpedanz durch ein Steuerungssignal zu steuern, das eine ausgewählte Schaltimpulsfrequenz und eine ausgewählte Schaltimpulsanzahl aufweist. Des Weiteren ist die Steuerungseinheit dazu ausgestaltet und eingerichtet, mehrwertige zumindest ternäre Symbole in das Steuerungssignal zu codieren.

Erfindungsgemäß ist der Funk-Transponder dazu ausgestaltet und eingerichtet, Symbolwerte jeweils zu Schaltimpulsfolgen zuzuordnen, die jeweils eine eindeutige Kombination aus Schaltimpulsfrequenz, Schaltimpulszahl und Phasenverschiebung aufweisen. Dabei sind nur Kombinationen auswählbar, deren Quotient aus Schaltimpulszahl und Schaltimpulsfrequenz innerhalb eines vorgegebenen Wertbereichs liegt.

Die vorliegende Erfindung wird nachfolgend an einem Ausführungsbeispiel anhand der Zeichnung näher erläutert. Es zeigt
- Figur 1: eine schematische Darstellung eines Funk-Transponder-Systems mit einem Funk-Transponder und einem mit diesem verbundenen Funk-Transponder-Lesegerät,
- Figur 2: eine erste Schaltimpulsfolge zur Lastmodulation für den Funk-Transponder entsprechend Figur 1,
- Figur 3: weitere Schaltimpulsfolgen und zugeordnete Symbolwerte.

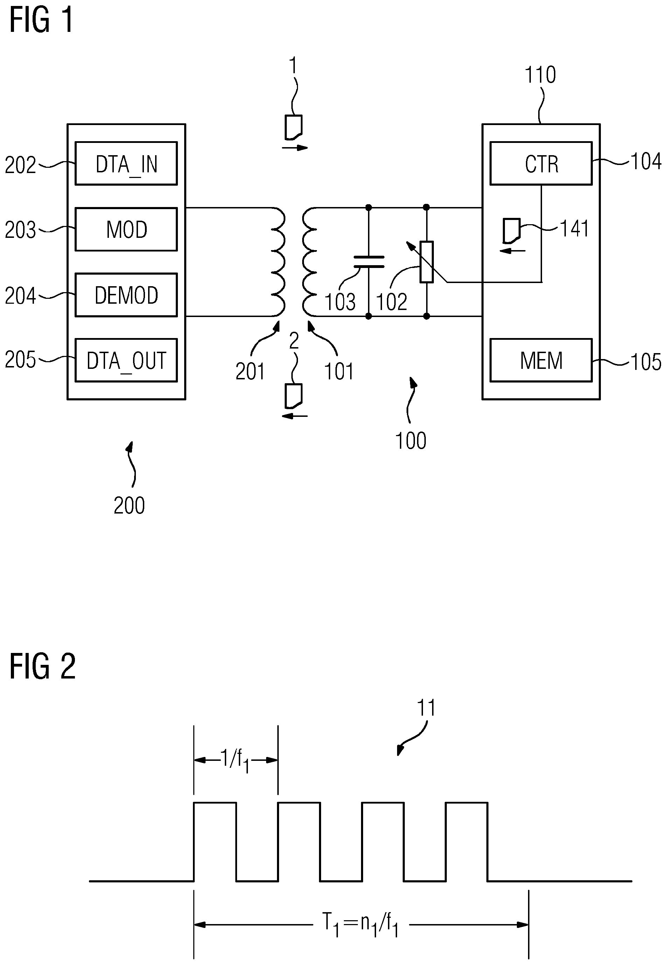

Das in Figur 1 schematisch dargestellte Funk-Transponder-System umfasst ein Funk-Transponder-Lese-/Schreibgerät 200 und einen mit diesem induktiv koppelbaren Funk-Transponder 100. Dementsprechend weisen der Funk-Transponder 100 und das Funk-Transponder-Lese-/Schreibgerät 200 jeweils eine induktive Antennenanordnung 101, 201 auf. Die Antennenanordnungen 101, 201 sind daher in Figur 1 als miteinander gekoppelte Induktivitäten dargestellt. Das Funk-Transponder-Lese-/Schreibgerät 200 umfasst im vorliegenden Ausführungsbeispiel außerdem einen Dateneingang 202 zur Entgegennahme von an den Funk-Transponder 100 zu übermittelnden Steuerungsbefehlen, eine Modulationseinheit 203, eine Demodulationseinheit 204 sowie einen Datenausgang 204 zur Bereitstellung aus dem Funk-Transponder 100 ausgelesener Informationen. Im vorliegenden Ausführungsbeispiel ist der Funk-Transponder 100 ein RFID-Tag. Dementsprechend ist das Funk-Transponder-Lese-/Schreibgerät 200 ein RFID-Lese-/Schreibgerät.

Der Funk-Transponder 100 umfasst eine durch eine Lastimpedanz 102 und eine Steuerungseinheit 104 für die Lastimpedanz 102 gebildete Lastmodulationseinheit. Außerdem weist der Funk-Transponder 100 eine Speichereinheit 105 auf, die mittels des Funk-Transponder-Lese-/Schreibgeräts 200 ausgelesen bzw. beschrieben werden kann. In der Speichereinheit 105 ist zumindest ein dem Funk-Transponder 100 zugeordneter Identifikator gespeichert, der üblicherweise nicht verändert wird. Die Steuerungseinheit 105 und die Speichereinheit 105 sind im vorliegenden Ausführungsbeispiel in einem Schaltkreis 110 integriert, der beide Einheiten umfasst.

Zusätzlich umfasst der Funk-Transponder 100 eine parallel zur Antennenanordnung 101 und zur Lastimpedanz 102 angeordnete Kondensatoranordnung 103. Die Kondensatoranordnung 103 ist vorzugsweise hinsichtlich ihrer Kapazität einstellbar und bildet insbesondere mit der Antennenanordnung 101 einen abstimmbaren Resonanzkreis. Zur Einstellung ihrer Kapazität kann die Kondensatoranordnung 103 beispielsweise eine Mehrzahl parallel zueinander angeordneter Kondensatoren aufweisen, die jeweils in Reihe zu einer Sicherung angeordnet sind und mittels der jeweiligen Sicherung zur Abstimmung des Resonanzkreises abgeschaltet werden können. Im vorliegenden Ausführungsbeispiel ist der Funk-Transponder 100 passiv betrieben, weist also keine eigene Energieversorgung auf, sondern wird über ein durch das Funk-Transponder-Lese-/Schreibgerät 200 erzeugtes elektro-magnetisches Wechselfeld gespeist.

Zur Datenübermittlung zwischen dem Funk-Transponder-Lese-/ Schreibgerät 200 und dem Funk-Transponder 100 erzeugt das Funk-Transponder-Lese-/Schreibgerät 200 mittels seiner Antennenanordnung 100 ein elektro-magnetisches Wechselfeld, das zumindest eine am Funk-Transponder-Lese-/Schreibgerät 200 eingestellte Trägerfrequenz umfasst. Insbesondere moduliert das Funk-Transponder-Lese-/Schreibgerät 200 zumindest einen codierten Steuerungsbefehl auf ein Funk-Trägersignal mit der eingestellten Trägerfrequenz und übermittelt das modulierte Funk-Trägersignal 1 an den Funk-Transponder 100.

Der Funk-Transponder 100 empfängt das modulierte Funk-Trägersignal 1 mittels seiner induktiven Antennenanordnung 101 und decodiert mittels seiner Steuerungseinheit 104 den vom Funk-Transponder-Lese-/Schreibgerät 200 übermittelten Steuerungsbefehl. Zur Erzeugung eines Antwortsignals 2 steuert die Steuerungseinheit 104 des Funk-Transponders 100 eine Veränderung der Lastimpedanz 102 durch ein Steuerungssignal 141. Auf diese Weise codiert und moduliert der Funk-Transponder 100 seine Antwort in das durch das Funk-Transponder-Lese-/ Schreibgerät 200 erzeugte elektro-magnetische Wechselfeld, und zwar durch Feldveränderung mittels Lastmodulation.

Die veränderbare Lastimpedanz kann einfachstenfalls beispielsweise durch einen schaltbaren Lastwiderstand realisiert sein. In diesem Fall steuert die Steuerungseinheit 104 des Funk-Transponders 100 zur Erzeugung des Antwortsignals 2 eine Zuschaltung des Lastwiderstands durch das Steuerungssignal 141. Bei zugeschaltetem Lastwiderstand verbraucht der Funk-Transponder 100 einen Energieanteil des durch das Funk-Transponder-Lese-/Schreibgerät 200 erzeugten elektro-magnetischen Wechselfeldes. Dies detektiert das Funk-Transponder-Lese-/ Schreibgerät 200 mittels seiner Demodulationseinheit 204. Auf diese Weise kann das Funk-Transponder-Lese-/Schreibgerät 200 beispielsweise aus der Speichereinheit 105 des Funk-Transponders 100 ausgelesene Informationen an seinem Datenausgang 204 bereitstellen.

In Figur 2 ist beispielhaft eine erste Schaltimpulsfolge 11 für das Steuerungssignal 141 dargestellt, das eine ausgewählte Schaltimpulsfrequenz f₁ und eine ausgewählte Schaltimpulsanzahl n₁ (hier: 4) aufweist. Hieraus ergibt sich für die erste Schaltimpulsfolge eine Symboldauer T₁=n₁/f₁, die reziprok zu einer möglichen Datenrate ist. Üblicherweise ist eine tatsächliche Datenrate geringer als diese mögliche Datenrate, wenn noch zusätzliche Codiervorschriften, beispielsweise Manchester-Codierung oder Puls-Positionscodierung, berücksichtigt werden. Diese zusätzlichen Codiervorschriften bieten einerseits Möglichkeiten zur Erkennung von Übertragungsfehlern. Andererseits können durch die zusätzlichen Codiervorschriften weitere Funktionalitäten ermöglicht werden, beispielsweise Kollisionserkennung oder Einfügung zusätzlicher Redundanz für eine erhöhte Datenübermittlungssicherheit.

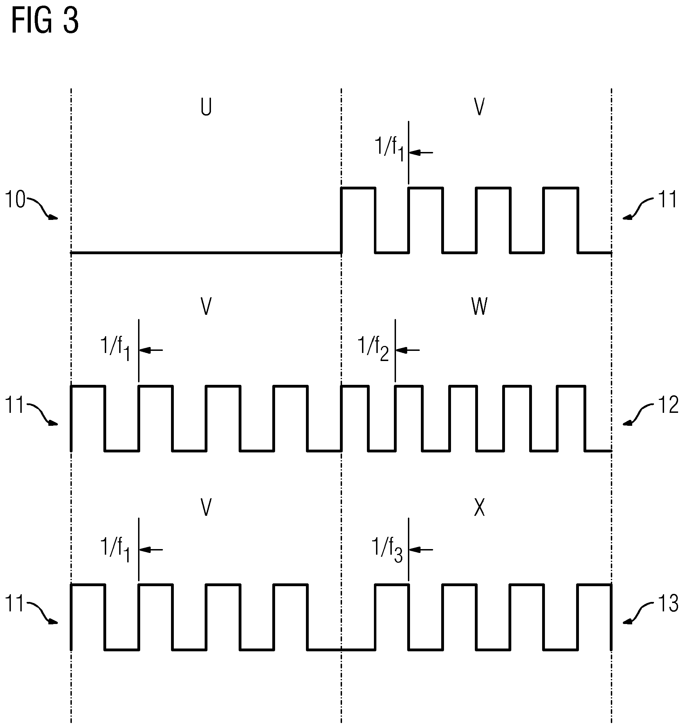

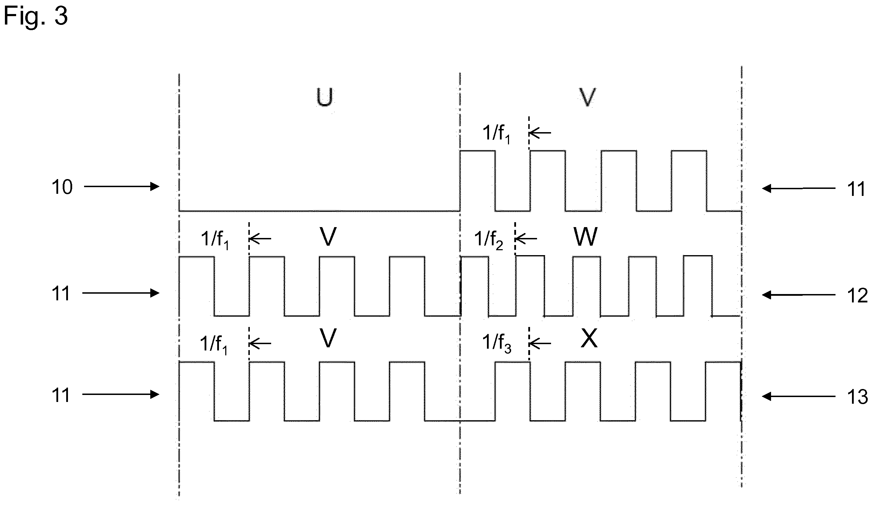

Auf Basis der ersten Schaltimpulsfolge 11 gemäß Figur 2 und weiterer in Figur 3 dargestellter Schaltimpulsfolgen 10, 12-13 codiert die Steuerungseinheit 104 Symbole, die jeweils einen von mehreren Werten repräsentieren, in das Steuerungssignal 141. Auf jeden Fall sind die codierten Symbole zumindest ternär, also 3-wertig. Im vorliegenden Ausführungsbeispiel werden quaternäre Symbole verwendet, die als Symbolwerte U, V, W oder X annehmen können und somit einen Informationsgehalt von 2 bit aufweisen. Die Steuerungseinheit 104 ordnet die Symbolwerte U-X entsprechend einer in der Speichereinheit 105 des Funk-Transponders 100 gespeicherten Codetabelle den Schaltimpulsfolgen 10-13 zu. Eine entsprechende Codetabelle ist auch im Funk-Transponder-Lese-/Schreibgerät 200 gespeichert. In der Codetabelle ist der ersten Schaltimpulsfolge 11 beispielsweise der Symbolwert V zugeordnet, während einer zweiten Schaltimpulsfolge 12 der Symbolwert W, einer dritten Schaltimpulsfolge 13 der Symbolwert X und einer vierten Schaltimpulsfolge 10 der Symbolwert U zugeordnet ist.

Im vorliegenden Ausführungsbeispiel weisen die erste bis dritte Schaltimpulsfolge 11-13 jeweils eine eindeutige Kombination aus Schaltimpulsfrequenz f₁, f₂, f₃=f₁, Schaltimpulszahl n₁=4, n₂=5, n₃=4 und Phasenverschiebung ϕ₁=0°, ϕ₂=0°, ϕ₃=180° auf. Dabei sind nur Kombinationen zulässig, deren Quotient aus Schaltimpulszahl nᵢ und Schaltimpulsfrequenz fᵢ innerhalb eines vorgegebenen Wertbereichs Dₘᵢₙ-Dₘₐₓ liegt. Vorzugsweise werden zur Codierung der Symbole zumindest eine erste (f₁=f₃) und eine zweite Schaltimpulsfrequenz (f₂) sowie eine erste (n₁=n₃) und eine zweite Schaltimpulsanzahl (n₂) verwendet, deren Quotienten n₁/f₁=n₃/f₃, n₂/f₂ maximal 10 % voneinander abweichen. Auf diese Weise bleibt die mögliche Datenrate jeweils hinreichend konstant.

Die dem Symbolwert U zugeordnete vierte Schaltimpulsfolge 10 ist eine verschwindende Schaltimpulsfolge, die keine Schaltimpulse umfasst. Durch diese verschwindende Schaltimpulsfolge wird eine Lastmodulation für einen vorgegebenen Zeitraum deaktiviert wird, der innerhalb des vorgegebenen Wertbereichs Dₘᵢₙ-Dₘₐₓ des Quotienten aus Schaltimpulszahl nᵢ und Schaltimpulsfrequenz fᵢ liegt. Das Steuerungssignal 141 umfasst also entweder im wesentlichen Rechteckimpulse oder weist temporär keine Signalstärke auf. Im vorliegenden Ausführungsbeispiel weisen die Rechteckimpulse jeweils eine Impulsdauer auf, die einer halben Periodendauer entspricht (Tastgrad 50 %). Insgesamt steuert Steuerungseinheit mittels der den Symbolwerten U-X zugeordneten Schaltimpulsfolgen 10-13 eine Lastmodulation mit kombinierter Frequenzumtastung, Phasenumtastung und Modulationsdeaktivierung.

Grundsätzlich können ausgewählte Symbole Steuerungsbefehle zur Datenflusskontrolle zwischen dem Funk-Transponder-Lese-/ Schreibgerät 200 und dem Funk-Transponder 100, zur Kollisionserkennung bei gleichzeitigen Sendeversuchen mehrerer Funk-Transponder bzw. zur Kennzeichnung eines Anfangs oder Endes eines Datenrahmens repräsentieren.

## Patentansprüche

1. Verfahren zur Datenübermittlung zwischen einem Funk-Transponder-Lesegerät und einem Funk-Transponder, bei dem
- das Funk-Transponder-Lesegerät (200) zumindest einen Steuerungsbefehl auf ein Funk-Trägersignal moduliert und das modulierte Funk-Trägersignal (1) an den Funk-Transponder (100) übermittelt,
- der Funk-Transponder (100) das modulierte Funk-Trägersignal (1) mittels einer induktiven Antennenanordnung (101) empfängt, an die eine Lastmodulationseinheit angeschlossen ist, die eine veränderbare Lastimpedanz (102) umfasst,
- eine Steuerungseinheit (104) des Funk-Transponders (100) zur Erzeugung eines Antwortsignals (2) eine Veränderung der Lastimpedanz (102) durch ein Steuerungssignal (141) steuert, das eine ausgewählte Schaltimpulsfrequenz und eine ausgewählte Schaltimpulsanzahl aufweist, **dadurch gekennzeichnet, dass**
- die Steuerungseinheit (104) mehrwertige zumindest ternäre Symbole in das Steuerungssignal (141) codiert,
- Symbolwerte (U-X) jeweils zu Schaltimpulsfolgen (10-13) zugeordnet werden, die jeweils eine eindeutige Kombination aus Schaltimpulsfrequenz, Schaltimpulszahl und Phasenverschiebung aufweisen, wobei nur Kombinationen ausgewählt werden, deren Quotient aus Schaltimpulszahl und Schaltimpulsfrequenz innerhalb eines vorgegebenen Wertbereichs liegt.

2. Verfahren nach Anspruch 1,
bei dem zur Codierung der Symbole zumindest eine erste und eine zweite Schaltimpulsfrequenz, eine erste und eine zweite Schaltimpulsanzahl sowie eine erste und eine zweite Phasenverschiebung verwendet werden.

3. Verfahren nach einem der Ansprüche 1 oder 2,
bei dem zur Codierung der Symbole zumindest eine erste und eine zweite Schaltimpulsfrequenz sowie eine erste und eine zweite Schaltimpulsanzahl verwendet werden und bei dem ein Quotient aus erster Schaltimpulszahl und erster Schaltimpulsfrequenz und ein Quotient aus zweiter Schaltimpulszahl und zweiter Schaltimpulsfrequenz maximal 10 % voneinander abweichen.

4. Verfahren nach einem der Ansprüche 1 bis 3,
bei dem zusätzlich genau ein Symbolwert (U) verwendet wird, dem eine verschwindende Schaltimpulsfolge (10) zugeordnet ist, durch die eine Lastmodulation für einen vorgegebenen Zeitraum deaktiviert wird.

5. Verfahren nach Anspruch 4,
bei dem der vorgegebene Zeitraum innerhalb des vorgegebenen Wertbereichs des Quotienten aus Schaltimpulszahl und Schaltimpulsfrequenz liegt.

6. Verfahren nach einem der Ansprüche 1 bis 5,
bei dem das Steuerungssignal im wesentlichen Rechteckimpulse umfasst oder temporär keine Signalstärke aufweist.

7. Verfahren nach Anspruch 6,
bei dem die Rechteckimpulse jeweils eine Impulsdauer aufweisen, die einer halben Periodendauer entspricht.

8. Verfahren nach einem der Ansprüche 1 bis 7,
bei dem die Steuerungseinheit die Symbolwerte entsprechend einer in einer Speichereinheit des Funk-Transponders gespeicherten Codetabelle zu Schaltimpulsfolgen zuordnet und bei dem im Funk-Transponder-Lesegerät eine entsprechende Codetabelle gespeichert ist.

9. Verfahren nach einem der Ansprüche 1 bis 8,
bei dem die Steuerungseinheit mittels der den Symbolwerten zugeordneten Schaltimpulsfolgen eine Lastmodulation mit kombinierter Frequenzumtastung, Phasenumtastung und Modulationsdeaktivierung steuert.

10. Verfahren nach einem der Ansprüche 1 bis 9,
bei dem ausgewählte Symbolwerte Steuerungsbefehle zur Datenflusskontrolle zwischen Funk-Transponder-Lesegerät und Funk-Transponder, zur Kollisionserkennung bei gleichzeitigen Sendeversuchen mehrerer Funk-Transponder und/oder zur Kennzeichnung eines Anfangs oder Endes eines Datenrahmens repräsentieren.

11. Verfahren nach einem der Ansprüche 1 bis 10,
bei dem das Funk-Transponder-Lesegerät den Steuerungsbefehl codiert und danach auf das Funk-Trägersignal moduliert.

12. Funk-Transponder zur Durchführung eines Verfahrens nach einem der Ansprüche 1 bis 11 mit
- einer induktiven Antennenanordnung, die dazu ausgestaltet und eingerichtet ist, ein vom einem Funk-Transponder-Lesegerät übermitteltes moduliertes Funk-Trägersignal zu empfangen, das zumindest einen auf ein Funk-Trägersignal modulierten Steuerungsbefehl umfasst,
- einer an die Antennenanordnung angeschlossenen Lastmodulationseinheit, die eine veränderbare Lastimpedanz umfasst,
- eine Steuerungseinheit, die dazu ausgestaltet und eingerichtet ist,
- zur Erzeugung eines Antwortsignals eine Veränderung der Lastimpedanz durch ein Steuerungssignal zu steuern, das eine ausgewählte Schaltimpulsfrequenz und eine ausgewählte Schaltimpulsanzahl aufweist, 2-**dadurch gekennzeichnet, dass** die Steuerungseinheit dazu ausgestaltet und eingerichtet ist,
- mehrwertige zumindest ternäre Symbole in das Steuerungssignal zu codieren,
- wobei der Funk-Transponder dazu ausgestaltet und eingerichtet ist, Symbolwerte jeweils zu Schaltimpulsfolgen zuzuordnen, die jeweils eine eindeutige Kombination aus Schaltimpulsfrequenz, Schaltimpulszahl und Phasenverschiebung aufweisen, wobei nur Kombinationen auswählbar sind, deren Quotient aus Schaltimpulszahl und Schaltimpulsfrequenz innerhalb eines vorgegebenen Wertbereichs liegt.

## Claims

1. Method for transmitting data between a radio transponder reader and a radio transponder, in which
- the radio transponder reader (200) modulates at least one control command onto a radio carrier signal and transmits the modulated radio carrier signal (1) to the radio transponder (100),
- the radio transponder (100) receives the modulated radio carrier signal (1) by means of an inductive antenna arrangement (101) to which a load modulation unit that comprises an alterable load impedance (102) is connected,
- a control unit (104) of the radio transponder (100) generates a response signal (2) by controlling an alteration of the load impedance (102) by means of a control signal (141) that has a selected switching impulse frequency and a selected number of switching impulses, **characterized in that**
- the control unit (104) encodes multi-valued at least ternary symbols into the control signal (141),
- symbol values (U-X) are each assigned to switching impulse sequences (10-13) that each have a unique combination of switching impulse frequency, number of switching impulses and phase shift, wherein only combinations whose quotient of the number of switching impulses and the switching impulse frequency is within a prescribed range of values are selected.

2. Method according to Claim 1,
in which the symbols are encoded by using at least a first and a second switching impulse frequency, a first and a second number of switching impulses and a first and a second phase shift.

3. Method according to either of Claims 1 and 2,
in which the symbols are encoded by using at least a first and a second switching impulse frequency and a first and a second number of switching impulses and in which a quotient of the first number of switching impulses and the first switching impulse frequency and a quotient of the second number of switching impulses and the second switching impulse frequency differ from one another by a maximum of 10%.

4. Method according to one of Claims 1 to 3,
in which additionally precisely one symbol value (U) is used that has an associated tiny switching impulse sequence (10) that deactivates a load modulation for a prescribed period.

5. Method according to Claim 4,
in which the prescribed period is within the prescribed range of values of the quotient of the number of switching impulses and the switching impulse frequency.

6. Method according to one of Claims 1 to 5,
in which the control signal essentially comprises square-wave impulses or temporarily has no signal strength.

7. Method according to Claim 6,
in which the square-wave impulses each have an impulse duration that corresponds to half of one period duration.

8. Method according to one of Claims 1 to 7,
in which the control unit assigns the symbol values to switching impulse sequences in accordance with a code table stored in a memory unit of the radio transponder and in which a corresponding code table is stored in the radio transponder reader.

9. Method according to one of Claims 1 to 8,
in which the control unit uses the switching impulse sequences assigned to the symbol values to control a load modulation with combined frequency shift keying, phase shift keying and modulation deactivation.

10. Method according to one of Claims 1 to 9,
in which selected symbol values represent control commands for data flow control between radio transponder reader and radio transponder, for collision detection during simultaneous transmission attempts by multiple radio transponders and/or for identifying a start or end of a data frame.

11. Method according to one of Claims 1 to 10,
in which the radio transponder reader encodes the control command and then modulates it onto the radio carrier signal.

12. Radio transponder for performing a method according to one of Claims 1 to 11, having
- an inductive antenna arrangement designed and configured to receive a modulated radio carrier signal, transmitted by a radio transponder reader, that comprises at least one control command modulated onto a radio carrier signal,
- a load modulation unit, connected to the antenna arrangement, that comprises an alterable load impedance,
- a control unit designed and configured
- to generate a response signal by controlling an alteration of the load impedance by means of a control signal that has a selected switching impulse frequency and a selected number of switching impulses, **characterized in that** the control unit is designed and configured
- to encode multi-valued at least ternary symbols into the control signal,
- wherein the radio transponder is designed and configured to assign symbol values each to switching impulse sequences that each have a unique combination of switching impulse frequency, number of switching impulses and phase shift, wherein only combinations whose quotient of the number of switching impulses and the switching impulse frequency is within a prescribed range of values are selectable.

## Revendications

1. Procédé de transmission de données entre un appareil de lecture transpondeur radio et un transpondeur radio, dans lequel
- l'appareil (200) de lecture transpondeur radio module au moins une instruction de commande sur un signal porteur radio et transmet le signal (1) porteur radio modulé au transpondeur (100) radio,
- le transpondeur (100) radio reçoit le signal (1) porteur radio modulé au moyen d'un agencement (101) d'antenne inductif, auquel est raccordée une unité de modulation de charge comprenant une impédance (102) de charge variable,
- une unité (104) de commande du transpondeur (100) radio commande, pour la production d'un signal (2) de réponse, une variation de l'impédance (102) de charge par un signal (141) de commande, qui a une fréquence d'impulsions de coupure sélectionnée et un nombre d'impulsions de coupure sélectionné, **caractérisé en ce que**
- l'unité (104) de commande code des symboles plurivalents, au moins ternaires, du signal (141) de commande,
- on associe des valeurs (U-X) de symbole, respectivement, à des séquences (10 à 13) d'impulsions de coupure, qui ont chacune une combinaison univoque de fréquence d'impulsions de coupure, de nombre d'impulsions de coupure et de déphasage, seules étant sélectionnées des combinaisons, dont le quotient du nombre d'impulsions de coupure par la fréquence d'impulsions de coupure est dans une plage de valeurs donnée à l'avance.

2. Procédé suivant la revendication 1,
dans lequel, pour le codage des symboles, on utilise au moins une première et une deuxième fréquences d'impulsions de coupure, un premier et un deuxième nombres d'impulsions de coupure, ainsi qu'un premier et un deuxième déphasages.

3. Procédé suivant l'une des revendications 1 ou 2,
dans lequel, pour le codage des symboles, on utilise au moins une première et une deuxième fréquences d'impulsions de coupure, ainsi qu'un premier et un deuxième nombres d'impulsions de coupure, et dans lequel un quotient d'un premier nombre d'impulsions de coupure par une première fréquence d'impulsions de coupure et un quotient d'un deuxième nombre d'impulsions de coupure par une deuxième fréquence d'impulsions de coupure se distinguent l'un de l'autre de 10% au maximum.

4. Procédé suivant l'une des revendications 1 à 3,
dans lequel on utilise supplémentairement exactement une valeur (U) de symbole, à laquelle est associée une séquence (10) d'impulsions de coupure évanescente, par laquelle on désactive une modulation de charge pendant un laps de temps donné à l'avance.

5. Procédé suivant la revendication 4,
dans lequel le laps de temps donné à l'avance est dans une plage de valeurs donnée à l'avance du quotient du nombre d'impulsions de coupure par la fréquence d'impulsions de coupure.

6. Procédé suivant l'une des revendications 1 à 5,
dans lequel le signal de commande comprend, pour l'essentiel, des impulsions rectangulaires ou n'a temporairement pas d'intensité du signal.

7. Procédé suivant la revendication 6,
dans lequel les impulsions rectangulaires ont, respectivement, une durée, qui correspond à une demi période.

8. Procédé suivant l'une des revendications 1 à 7,
dans lequel l'unité de commande associe à des séquences d'impulsions de coupure les valeurs de symbole, conformément à une table de code mise en mémoire dans une unité de mémorisation du transpondeur radio, et dans lequel une table de code correspondante est mise en mémoire dans l'appareil de lecture transpondeur radio.

9. Procédé suivant l'une des revendications 1 à 8,
dans lequel l'unité de commande commande, au moyen des séquences d'impulsions de coupure associées aux valeurs de symbole, une modulation de charge à balayage de fréquence, balayage de phase et désactivation de modulations combinées.

10. Procédé suivant l'une des revendications 1 à 9,
dans lequel des valeurs de symbole sélectionnées représentent des instructions de commande pour le contrôle du flux de données entre l'appareil de lecture transpondeur radio et le transpondeur radio pour la reconnaissance de collision lors d'essais d'envois simultanés de plusieurs transpondeurs radio et/ou pour la reconnaissance d'un début ou d'une fin d'une trame de données.

11. Procédé suivant l'une des revendications 1 à 10,
dans lequel l'appareil de lecture transpondeur radio code l'instruction de commande et la module ensuite sur le signal porteur radio.

12. Transpondeur radio pour effectuer un procédé suivant l'une des revendications 1 à 11, comprenant
- un agencement d'antenne inductif, qui est conformé et conçu pour recevoir un signal porteur radio modulé, qui est transmis par un appareil de lecture transpondeur radio et qui comprend au moins une instruction de commande modulée sur un signal porteur radio,
- une unité de modulation de charge, qui est raccordée à l'agencement d'antenne et qui comprend une impédance de charge variable,
- une unité de commande, conformée et conçue
- pour produire un signal de réponse pour commander une variation de l'impédance de charge par un signal de commande, qui a une fréquence d'impulsions de coupure sélectionnée et un nombre d'impulsions de coupure sélectionné,
**caractérisée en ce que** l'unité de commande est conçue et conformée pour
- coder des symboles plurivalents, au moins ternaires, du signal de commande,
- dans lequel le transpondeur radio est conformé et conçu pour associer des valeurs de symbole, respectivement, à des séquences d'impulsions de coupure, qui ont chacune une combinaison univoque de fréquence d'impulsions de coupure, de nombre d'impulsions de coupure et de déphasage, seules étant sélectionnées des combinaisons, dont le quotient du nombre d'impulsions de coupure par la fréquence d'impulsions de coupure est dans une plage de valeurs donnée à l'avance.
